(19) **Europäisches Patentamt / European Patent Office / Office européen des brevets**

(11) **EP 4 576 308 A1**

(12) **EUROPEAN PATENT APPLICATION**
published in accordance with Art. 153(4) EPC

(43) Date of publication:
**25.06.2025 Bulletin 2025/26**

(21) Application number: **23907770.4**

(22) Date of filing: **20.12.2023**

(51) International Patent Classification (IPC):
**H01M 10/0569** (2010.01)   **H01M 10/0525** (2010.01)

(52) Cooperative Patent Classification (CPC):
**H01M 10/0525; H01M 10/0569; Y02E 60/10**

(86) International application number:
**PCT/KR2023/021170**

(87) International publication number:
**WO 2024/136487 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 KR 20220183762**

(71) Applicant: **LG Energy Solution, Ltd.**
**Seoul 07335 (KR)**

(72) Inventors:
• **PARK, In-Tae**
  **Daejeon 34122 (KR)**
• **PARK, Seong-Hyo**
  **Daejeon 34122 (KR)**
• **SONG, Myeong-Jun**
  **Daejeon 34122 (KR)**
• **LEE, Chang-Hoon**
  **Daejeon 34122 (KR)**
• **LEE, Hyun-Soo**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ELECTROLYTE FOR LITHIUM-SULFUR SECONDARY BATTERY, AND LITHIUM-SULFUR SECONDARY BATTERY COMPRISING SAME**

(57)    The present disclosure relates to an electrolyte for a lithium-sulfur secondary battery and a lithium-sulfur secondary battery comprising the same, and provides a lithium-sulfur secondary battery with improved life characteristics by adjusting a solvent, a nonsolvent and a lithium salt included in the electrolyte to specific conditions.

**EP 4 576 308 A1**

**Description**

TECHNICAL FIELD

The present disclosure relates to an electrolyte for a lithium-sulfur secondary battery and a lithium-sulfur secondary battery comprising the same.

The present application claims priority to Korean Patent Application No. 10-2022-0183762 filed on December 23, 2022 in the Republic of Korea, the disclosure of which is incorporated herein by reference.

BACKGROUND ART

The existing lithium-sulfur (Li-S) batteries using catholyte systems do not make good use of high theoretical discharge capacity (1675 mAh/g) of sulfur because they rely on liquid phase reaction (catholyte type) through the production of $Li_2S_X$, intermediate product of polysulfide, and have a decline in life characteristics due to polysulfide dissolution induced degradation. To solve this problem, a $LiNO_3$ additive is used, but additive loss impedes long life behaviors of lithium sulfur batteries.

Recently, sparingly solvating electrolyte (SSE) systems have been suggested to suppress polysulfide dissolution and it was confirmed that electrolytes free of predetermined additives achieve normal operation without delayed charging. However, the life is still short, so there is a need to improve life characteristics.

To achieve high energy density of 400 Wh/kg or more, 600 Wh/L or more, there is a need for an electrolyte system for a lithium-sulfur secondary battery that can operate at 4.0 mAh/cm$^2$ or more and the porosity of 60 vol% or more and improve life characteristics.

SUMMARY

Technical Problem

The present disclosure is designed to solve the above-described problem and therefore the present disclosure is directed to providing an electrolyte for a lithium-sulfur secondary battery with high energy density and improved life characteristics and a lithium-sulfur secondary battery comprising the same.

It will be readily understood that these and other objectives and advantages of the present disclosure may be realized by the means or methods set forth in the appended claims and a combination thereof.

Technical Solution

The inventors found that the above-described problem could be solved through an electrolyte for a lithium-sulfur secondary battery as described below and a lithium-sulfur secondary battery including the same.

According to a first embodiment, the present disclosure relates to the electrolyte for the lithium-sulfur secondary battery including a solvent, a nonsolvent and at least two types of lithium salts, wherein the lithium salts include LiI,

wherein the solvent and the nonsolvent have a Solvent Volume Ratio (SVR) factor value of from 0.2 to 0.7, and the SVR factor value is represented by the following Equation 1, and
wherein the solvent and the lithium salts have a Molar mass Ratio (MR) factor value of from 0.75 to 1.85, and the MR factor value is represented by the following Equation 2,

$$[\text{Equation 1}]$$

$$\text{SVR factor} = \text{volume of the solvent} \div \text{volume of the nonsolvent}$$

MR factor = Number of moles of the solvent ÷ (Number of moles of the lithium salts excluding the LiI) [Equation 2]

According to a second embodiment, in the first embodiment, the present disclosure relates to the electrolyte for the lithium-sulfur secondary battery, wherein the SVR factor value is from 0.3 to 0.65.

According to a third embodiment, in the first or second embodiment, the present disclosure relates to the electrolyte for the lithium-sulfur secondary battery, wherein the MR factor value is from 1.0 to 1.75.

According to a fourth embodiment, in any one of the first to third embodiments, the present disclosure relates to the electrolyte for the lithium-sulfur secondary battery, wherein the solvent has a solubility of 0.1M or more for the lithium salts, and the nonsolvent has a solubility of less than 0.1M for the lithium salts.

According to a fifth embodiment, in any one of the first to fourth embodiments, the present disclosure relates to the electrolyte for the lithium-sulfur secondary battery, wherein the solvent includes a linear ether, a cyclic ether or a mixture thereof.

According to a sixth embodiment, in any one of the first to fifth embodiments, the present disclosure relates to the electrolyte for the lithium-sulfur secondary battery, wherein the solvent includes a mixture of a linear ether and a cyclic ether.

According to a seventh embodiment, in any one of the first to sixth embodiments, the present disclosure relates to the electrolyte for the lithium-sulfur secondary battery, wherein the nonsolvent includes a fluorinated ether.

According to an eighth embodiment, in any one of the first to seventh embodiments, the present disclosure relates to the electrolyte for the lithium-sulfur secondary battery, wherein the lithium salts include lithium bis(fluorosulfonyl) imide (LiFSI), lithium bis(trifluoromethanesulfonyl)imide (LiTFSI) and LiI.

According to a ninth embodiment, in any one of the first to eighth embodiments, the present disclosure relates to the electrolyte for the lithium-sulfur secondary battery, wherein an amount of the LiI is from 0.1 to 3.0 parts by weight based on total 100 parts by weight of the electrolyte for the lithium-sulfur secondary battery.

According to a tenth embodiment, in any one of the first to ninth embodiments, the present disclosure relates to the electrolyte for the lithium-sulfur secondary battery, wherein the amount of the LiI is from 0.35 to 15 parts by weight based on total 100 parts by weight of the lithium salts.

According to an eleventh embodiment, in any one of the first to tenth embodiments, the present disclosure relates to the electrolyte for the lithium-sulfur secondary battery, wherein the electrolyte for the lithium-sulfur secondary battery does not include at least one of a nitrate-based compound and a nitrite-based compound.

According to a twelfth embodiment, the present disclosure relates to the lithium-sulfur secondary battery including a negative electrode; a positive electrode; a separator; and the electrolyte according to any one of the first to eleventh embodiments.

Advantageous Effects

The electrolyte for the lithium-sulfur secondary battery according to the present disclosure and the lithium-sulfur secondary battery comprising the same may improve life characteristics by adjusting the solvent, the nonsolvent and the lithium salt included in the electrolyte to specific conditions.

DETAILED DESCRIPTION

Hereinafter, the present disclosure will be described in more detail.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The term "comprise" or "include" when used in this specification, specifies the presence of stated elements, but does not preclude the presence or addition of one or more other elements, unless the context clearly indicates otherwise.

Throughout the specification, "A and/or B" refers to either A or B or both.

In the present disclosure, "specific surface area" is measured by the Brunauer, Emmett and Teller (BET) method, and specifically, it may be calculated from the adsorption amount of nitrogen gas under the liquid nitrogen temperature (77K) using BEL Japan's BELSORP-mino II.

The term "polysulfide" as used herein is the concept that covers "polysulfide ion ($S_x^{2-}$, x = 8, 6, 4, 2)" and "lithium polysulfide ($Li_2S_x$ or $LiS_x^-$, x = 8, 6, 4, 2)".

The term "composite" as used herein refers to a material with physically·chemically different phases and more effective functions, formed by combining two or more materials.

The term "porosity" as used herein refers to the ratio of the volume of pores to the total volume of a structure, as indicated in %, and may be used interchangeably with the term pore ratio, void ratio, etc.

The present disclosure relates to an electrolyte for a lithium-sulfur secondary battery and a lithium-sulfur secondary battery including the same.

The electrolyte for the lithium-sulfur secondary battery according to an aspect of the present disclosure includes a solvent, a nonsolvent and at least two types of lithium salts, the lithium salts include LiI, the solvent and the nonsolvent have a Solvent Volume Ratio (SVR) factor value of from 0.2 to 0.7, and the solvent and the lithium salts have a Molar mass Ratio (MR) factor value of from 0.75 to 1.85.

Hereinafter, each component will be described in detail.

The lithium-sulfur secondary battery, one of secondary batteries, is attracting attention as a next-generation secondary battery due to its advantages: high discharge capacity and theoretical energy density, abundance and low price of sulfur used as a positive electrode active material, leading to a reduction in manufacturing cost of the battery, and eco-friendliness.

Meanwhile, polysulfide dissolution suppression is one of challenges of the lithium-sulfur secondary battery, and to this end, a sparingly solvating electrolyte (SSE) system has been developed. However, because the SSE system induces solid phase reaction, it is difficult to maintain reversible reaction of the positive/negative electrode active material, so the short battery life is still an unsolved problem.

In this circumstance, the inventors invented a predetermined electrolyte system for improving the life by using an SSE system with an exclusion of a nitrate-based and/or nitrite-based electrolyte solvent that is critical to the life of lithium-sulfur batteries and using a solvent, a nonsolvent and a lithium salt satisfying predetermined conditions, to solve the problem with degradation of the lithium negative electrode, gas generation in the battery or failure to maintain reversible reaction of the positive/negative electrode active material.

The solvent and the nonsolvent have the SVR factor value of from 0.2 to 0.7, as represented by Equation 1 below.

[Equation 1]

$$\text{SVR factor} = \text{volume (A) of the solvent} \div \text{volume (B) of the nonsolvent}$$

In the above Equation 1, the volume of the solvent and the volume of the nonsolvent refer to the volume of the solvent and the nonsolvent in the electrolyte, respectively, and the SVR factor value is dimensionless.

The SVR factor value may be from 0.2 to 0.7, and according to an embodiment of the present disclosure, the SVR factor value may be in a range between 0.3 and 0.65 or between 0.4 and 0.5. When the SVR factor value is outside of the aforementioned range, it is difficult to effectively improve the performance. In particular, when the SVR factor value is larger than 0.7, excess lithium polysulfides may dissolve in the electrolyte, and when the SVR factor is less than 0.2, solubility of the lithium salt is so low that it is impossible to produce the electrolyte, or even though the electrolyte is produced, the secondary battery fails to normally operate due to low ionic conductivity of the electrolyte.

In the present disclosure, the solvent may have solubility of 0.1M or more for the lithium salt, and the nonsolvent may have solubility of less than 0.1M for the lithium salt. Specifically, the solvent may have solubility of 0.1M or more for an imide-based lithium salt such as LiTFSI, LiFSI, LiTF, etc., and the nonsolvent may have solubility of less than 0.1M for the lithium salt.

The solvent and the nonsolvent may include, without limitation, any type of solvent and nonsolvent that are commonly used in electrolytes of secondary batteries, and meet the solubility condition for the lithium salt and the SVR factor value described above.

In an embodiment of the present disclosure, the solvent may include a linear ether, a cyclic ether or a mixture thereof.

For example, the solvent may include linear ethers such as dimethyl ether, diethyl ether, dipropyl ether, dibutyl ether, diisobutyl ether, ethylmethyl ether, ethylpropyl ether, ethyltertbutyl ether, dimethoxymethane, trimethoxymethane, dimethoxyethane, diethoxyethane, dimethoxypropane, diethyleneglycol dimethylether, diethyleneglycol diethylether, triethyleneglycol dimethylether, tetraethyleneglycol dimethylether, ethyleneglycol divinylether, diethyleneglycol divinylether, triethyleneglycol divinylether, dipropylene glycol dimethylene ether, butylene glycol ether, diethyleneglycol ethylmethylether, diethyleneglycol isopropylmethylether, diethyleneglycol butylmethylether, diethyleneglycol tertbutylethylether, ethyleneglycol ethylmethylether, etc.; cyclic ethers such as dioxolane, methyldioxolane, dimethyldioxolane, vinyldioxolane, methoxydioxolane, ethylmethyldioxolane, oxane, dioxane, trioxane, tetrahydrofuran, 2-methyltetrahydrofuran, dimethyltetrahydrofuran, dimethoxytetrahydrofuran, ethoxytetrahydrofuran, dihydropyran, tetrahydropyran, furan, 2-methylfuran, etc.; or a mixture thereof.

Meanwhile, the solvent may include the mixture of the linear ether and the cyclic ether. Specific examples may include dimethoxyethane and tetrahydrofuran, dimethoxyethane and 2-methyltetrahydrofuran, dimethoxyethane and tetrahydropyran, ethyleneglycol diethylether and tetrahydrofuran, or ethyleneglycol diethylether and methyltetrahydrofuran. The inclusion of the mixture of the linear ether and the cyclic ether has a beneficial effect on stabilization of the negative electrode and gas generation suppression.

In an embodiment of the present disclosure, the nonsolvent may include a fluorinated ether. For example, the nonsolvent may include fluorinated ether compounds, such as 1,1,2,2-tetrafluoroethyl 2,2,3,3-tetrafluoropropylether (TTE), bis(fluoromethyl)ether, 2-fluoromethyl ether, bis(2,2,2-trifluoroethyl)ether, propyl 1,1,2,2-tetrafluoroethylether, isopropyl 1,1,2,2-tetrafluoroethylether, 1,1,2,2-tetrafluoroethylisobutylether, 1,1,2,3,3,3-hexafluoropropylethylether, 1H,1H,2'H,3H-decafluorodipropylether, 1H,1H,2'H-perfluorodipropylether, difluoromethyl 2,2,2-trifluoroethyl ether, 1,2,2,2-tetrafluoroethyl trifluoromethyl ether, 1,1,2,3,3,3-hexafluoropropyl difluoromethyl ether, pentafluoroethyl 2,2,2-trifluoroethyl ether, 1H, 1H, 2'H-perfluorodipropyl ether, etc.

In the present disclosure, the electrolyte for the lithium-sulfur secondary battery includes at least two types of lithium salts, and the lithium salts include LiI. That is, the lithium salts may include LiI and at least one type of another lithium salt.

The other lithium salt may include, without limitation, any compound that provides lithium ions used in lithium secondary batteries. The lithium salt may include imide-based lithium salts, $LiPF_6$, $LiClO_4$, $LiAsF_6$, $LiBF_4$, $LiSbF_6$, $LiAlO_4$, $LiAlCl_4$, $LiCH_3CO_2$, $LiCF_3SO_3$, $LiC_4F_9SO_3$, LiCl, LiBr, or $LiB(C_2O_4)_2$.

Because the imide-based lithium salt is chemically stable and dissolves in an organic solvent well, when the imide-based lithium salt is used as the lithium salt of the lithium-sulfur secondary battery, it may be possible to stably maintain the capacity of the lithium-sulfur battery and improve the battery life. Additionally, when two or more imide-based lithium salts, not a single lithium salt, are used, stability between the lithium negative electrode and the electrolyte solution may improve, making it possible to manufacture the secondary battery having long life.

For example, the imide-based lithium salt may include lithium bis(trifluoromethanesulfonyl)imide (LiTFSI), lithium bis(fluorosulfonyl)imide (LiFSI), lithium bis(perfluoroethylsulfonyl)imide (LiBETI), etc.

The lithium salt included in the electrolyte for the lithium-sulfur secondary battery according to an embodiment of the present disclosure may include three different types of lithium salts.

Specifically, the lithium salt included in the electrolyte for the lithium-sulfur secondary battery according to an embodiment of the present disclosure may include lithium bis(fluorosulfonyl)imide (LiFSI), lithium bis(trifluoromethanesulfonyl)imide (LiTFSI) and LiI. When the above-described combination of lithium salts is included, it may be possible to reduce side reaction with the negative electrode and increase reversibility of sulfur.

In this instance, the amount of the LiI may be from 0.1 to 3.0 parts by weight, or from 0.1 to 2 parts by weight based on 100 parts by weight of the electrolyte for the lithium-sulfur secondary battery. Alternatively, the amount of the LiI may be from 0.35 to 15 parts by weight based on 100 parts by weight of all lithium salts. When the amount of the LiI is within the aforementioned range, it may be possible to increase reversibility of sulfur, thereby improving the battery life.

The molar concentration of all lithium salts may be in a range between 0.1 and 5.0M, or between 0.1 and 3.0M. Within the aforementioned range, the electrolyte may have optimum conductivity and viscosity and exhibit the outstanding electrolyte performance, contributing to the effective movement of lithium ions.

The solvent and the lithium salt have a Molar mass Ratio (MR) factor value of from 0.75 to 1.85, as represented by Equation 2 below.

MR factor = number of moles of the solvent ÷ number of moles of lithium salts excluding LiI          [Equation 2]

In the above Equation 2, the number of moles of lithium salts excluding LiI refers to the sum of the number of moles of lithium salts excluding LiI from all lithium salts included in the electrolyte, and the number of moles of the solvent refers to the sum of the number of moles of all solvents excluding the nonsolvent included in the electrolyte. The MR factor value is dimensionless.

The MR factor value may be from 0.75 to 1.85, and according to an embodiment of the present disclosure, the MR factor value may be in a range between 1.0 and 1.75 or between 1.0 and 1.7. When the MR factor value satisfies the aforementioned range, it may be possible to suppress dissolution of lithium polysulfide and increase ionic conductivity of the electrolyte, thereby improving the life of the secondary battery.

For example, a method for calculating the SVR factor value and the MR factor value based on Example 1 specified in Table 1 below will be described.

First, Example 1 includes 2MeTHF (solvent 1) : EGDEE (solvent 2) : TTE (nonsolvent) = 2:1:7 (volume ratio), so the SVR factor value is calculated as (2+1)/7 = 0.43.

Subsequently, Example 1 includes LiTFSI, LiFSI and LiI as the lithium salt, but in the calculation of the MR factor value, LiI is excluded when calculating the number of moles of all lithium salts. On the basis of production of 1kg of electrolyte, 0.66 mol of 2MeTHF (molar mass: 86.134), 0.73 mol of EGDEE (molar mass: 118.18), 0.71 mol of LiTFSI (molar mass: 287) and 0.23 mol of LiFSI (molar mass 187) are included, so the MR factor value is calculated as (0.66+0.73) / (0.71+0.23) = 1.48.

That is, it was confirmed that Example 1 satisfies the aforementioned ranges of SVR factor value and MR factor value of the present disclosure and shows the outstanding performance in the life evaluation results.

The electrolyte for the lithium-sulfur secondary battery according to an embodiment of the present disclosure does not include at least one of a nitrate-based compound and a nitrite-based compound.

The nitrate- and/or nitrite-based compound is generally used as an electrolyte additive, to form a stable coating on the lithium electrode and improve charge and discharge efficiency, but it is impossible to increase the life due to loss. In this circumstance, the inventors obtained the life improvement effect without including the nitrate- and/or nitrite-based compound commonly used as an additive.

The nitrate- or nitrite-based compound is not limited to a particular type in the present disclosure, but may include inorganic nitrate or nitrite compounds such as lithium nitrate (LiNO3), potassium nitrate (KNO3), cesium nitrate (CsNO3), barium nitrate (Ba(NO3)2), ammonium nitrate (NH4NO3), lithium nitrite (LiNO2), potassium nitrite (KNO2), cesium nitrite (CsNO2), ammonium nitrite (NH4NO2), etc.; organic nitrate or nitrite compounds such as methyl nitrate, dialkyl imidazolium nitrate, guanidine nitrate, imidazolium nitrate, pyridinium nitrate, ethyl nitrite, propylnitrite, butyl nitrite, pentyl nitrite, octyl nitrite, etc.; organic nitro compounds such as nitromethane, nitropropane, nitrobutane, nitrobenzene, dinitrobenzene, nitropyridine, dinitropyridine, nitrotoluene, dinitrotoluene, etc., or a combination thereof. Specifically, the additive may not include lithium nitrate (LiNO3).

Meanwhile, the electrolyte may further include another additive to improve charge and discharge characteristics, flame retardancy, etc. Examples of the additive may include pyridine, triethylphosphite, triethanolamine, cyclic ether, ethylene diamine, n-glyme, hexa phosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, fluoroethylene carbonate (FEC), propene sultone (PRS), vinylene carbonate (VC), etc.

A method for manufacturing the electrolyte for the lithium-sulfur secondary battery of the present disclosure is not particularly limited in the present disclosure, but the electrolyte may be manufactured by any method well known in the art.

In an embodiment of the present disclosure, there is provided a lithium-sulfur secondary battery including a negative electrode; a positive electrode; a separator; and the above-described electrolyte.

The negative electrode includes a negative electrode current collector; and a negative electrode active material layer on at least one surface of the negative electrode current collector, and the negative electrode active material layer includes a negative electrode active material, a conductive material and a binder.

Specifically, the negative electrode may be manufactured by coating a negative electrode slurry on one or two surfaces of the long sheet-shaped negative electrode current collector, drying the negative electrode slurry to remove the solvent and rolling, wherein the negative electrode slurry contains the negative electrode active material, the conductive material and the binder dispersed in the solvent. Meanwhile, the negative electrode including a non-coated region may be manufactured by coating the negative electrode slurry in a manner that the negative electrode slurry is not coated on a portion of the negative electrode current collector, for example, an end portion of the negative electrode current collector.

The negative electrode active material may include a material capable of reversible intercalation or deintercalation of lithium ions ($Li^+$), a material capable of reversibly forming a lithium containing compound by reaction with lithium ions, a lithium metal or a lithium alloy. The material capable of reversible intercalation or deintercalation of lithium ions may include, for example, crystalline carbon, amorphous carbon or a mixture thereof, and specifically, artificial graphite, natural graphite, graphitizable carbon fibers, amorphous carbon, soft carbon and hard carbon, but is not limited thereto. The material capable of reversibly forming the lithium containing compound by reaction with lithium ions may include, for example, tin oxide, titanium nitrate or silicon-based compounds. The lithium alloy may include, for example, alloys of lithium (Li) and metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn). Preferably, the negative electrode active material may be a lithium metal, and specifically, may be in the form of a lithium metal foil or a lithium metal powder. The silicon-based negative electrode active material may include Si, Si-Me alloys (where Me is at least one selected from the group consisting of Al, Sn, Mg, Cu, Fe, Pb, Zn, Mn, Cr, Ti, and Ni), $SiO_y$ (where $0<y<2$), Si-C composites or a combination thereof, and preferably $SiO_y$ (where $0<y<2$). Since the silicon-based negative electrode active material has high theoretical capacity, when the silicon-based negative electrode active material is included, it may be possible to improve capacity characteristics.

The negative electrode current collector may include negative electrode current collectors commonly used in the corresponding technical field, and may include, for example, copper, stainless steel, aluminum, nickel, titanium, sintered carbon, copper or stainless steel treated with carbon, nickel, titanium or silver on the surface, and aluminum-cadmium alloys. The negative electrode current collector may be typically 3 to 500 $\mu m$ in thickness, and may have microtexture on the surface to enhance the bonding strength of the negative electrode active material. For example, the negative electrode current collector may come in various forms, for example, a film, a sheet, a foil, a net, a porous body, a foam, a nonwoven fabrics, etc.

The conductive material may be used to provide conductive properties to the negative electrode, and may include, without limitation, any conductive material having the ability to conduct electrons without causing any chemical change in the corresponding battery. Specific examples may include graphite such as natural graphite or artificial graphite; carbon-based materials such as carbon black, acetylene black, Ketjen black, channel black, furnace black, lamp black, thermal black, carbon fibers, carbon nanotubes, etc.; metal powder or metal fibers such as copper, nickel, aluminum, silver, etc.; conductive whiskers such as zinc oxide, potassium titanate, etc.; conductive metal oxide such as titanium oxide, etc.; or conductive polymer such as polyphenylene derivatives, etc., used either singly or in combination. The conductive material may be typically included in an amount of from 1 to 30 wt%, from 1 to 20 wt%, or from 1 to 10 wt% based on the total weight of the negative electrode active material layer.

The binder plays a role in attaching the negative electrode active material particles to each other and improving the adhesion strength between the negative electrode active material and the negative electrode current collector. Specific examples may include polyvinylidene fluoride (PVDF), a vinylidene fluoride-hexafluoropropylene copolymer (PVDF-co-HFP), polyvinylalcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluoro rubber, or a variety of copolymers thereof, used either singly or in combination. The binder may be included in an amount of from 1 to 30 wt%, from 1 to 20 wt%, or from 1 to 10 wt% based on the total weight of the negative electrode active material layer.

The positive electrode includes a positive electrode current collector; and a positive electrode active material layer on at least one surface of the positive electrode current collector, and the positive electrode active material layer includes a positive electrode active material, and may further include a conductive material, a binder, an additive, etc.

The positive electrode current collector is configured to support the positive electrode active material as described in the current collector that supports the negative electrode. For example, the positive electrode current collector may include copper, stainless steel, aluminum, nickel, titanium, palladium, sintered carbon, copper or stainless steel treated with carbon, nickel or silver on the surface, aluminum-cadmium alloys, etc.

The positive electrode active material may include at least one selected from the group consisting of sulfur, especially elemental sulfur (S8) and a sulfur compound. The positive electrode active material may include at least one selected from the group consisting of inorganic sulfur, $Li_2Sn$ ($n \geq 1$), disulfide compounds, organic sulfur compounds and carbon-sulfur polymer ($(C_2S_x)n$, $x = 2.5$ to $50$, $n \geq 2$). Specifically, the positive electrode active material may include inorganic sulfur.

As sulfur included in the positive electrode active material does not have electrical conductivity itself, sulfur is used in combination with conductive materials such as carbon materials. Accordingly, sulfur may be included in the form of a sulfur-carbon composite, and preferably the positive electrode active material may be a sulfur-carbon composite.

The carbon included in the sulfur-carbon composite may be a porous carbon material that provides skeletons for uniformly and stably immobilizing sulfur and compensates for low electrical conductivity of sulfur to enhance electrochemical reaction.

The porous carbon material may be generally produced by carbonization of a variety of carbonaceous precursors. The porous carbon material may include irregular pores therein. The average diameter of the pores may be in a range between 1 and 200 nm, and the porosity may be in a range between 10 and 90% of the total volume of the porous carbon material. When the average diameter of the pores is less than the aforementioned range, the pore size is at molecular level, making sulfur loading impossible. In contrast, when the average diameter of the pores is more than the aforementioned range, it is not suitable for an electrode manufacturing process due to low mechanical strength of the porous carbon material.

The porous carbon material may be spherical, rod-like, spiky, platy, tubular or bulky in shape, and may be in any shape commonly used in lithium-sulfur batteries without limitation.

The porous carbon material may have a pore structure or large specific surface area and include any porous carbon material commonly used in the art. For example, the porous carbon material may include graphite; graphene; carbon black such as Denka black, acetylene black, Ketjen black, channel black, furnace black, lamp black, thermal black, etc.; carbon nanotubes (CNT) such as single-walled carbon nanotubes (SWCNT) and multi-walled carbon nanotubes (MWCNT); carbon fibers such as graphite nanofibers (GNF), carbon nanofibers (CNF), activated carbon fibers (ACF), etc.; graphite such as natural graphite, artificial graphite, expandable graphite, etc., activated carbon, etc. Preferably, the porous carbon material may be carbon nanotubes.

The sulfur-carbon composite may include sulfur in an amount of from 60 to 90 parts by weight, preferably from 65 to 85 parts by weight, and more preferably from 70 to 80 parts by weight based on 100 parts by weight of the sulfur-carbon composite. When the amount of sulfur is less than the aforementioned range, the amount of the porous carbon material in the sulfur-carbon composite is higher, the specific surface area increases, and the binder content to the sulfur content increases when manufacturing the positive electrode. The use of the binder in a higher amount eventually increases the surface resistance of the positive electrode and prevents the passage of electrons like an insulator, resulting in performance degradation of the battery. On the contrary, when the amount of sulfur is more than the aforementioned range, unbonded sulfur forming an agglomerate or re-deposition on the porous carbon material surface may occur, which makes it difficult to accept electrons and fails to participate in electrochemical reaction, resulting in battery capacity reduction.

Additionally, in the sulfur-carbon composite, sulfur may be disposed in at least one of the inner surface and the outer surface of the porous carbon material, and in this instance, sulfur may be present in an area of less than 100%, 1 to 95%, or 60 to 90% of the entire inner and outer surface of the porous carbon material. When sulfur is present in the inner surface and the outer surface of the porous carbon material within the aforementioned range, maximum effect may be exhibited in terms of electron transport area and electrolyte wetting. Specifically, as sulfur is thinly and uniformly loaded onto the inner and outer surface of the porous carbon material in the aforementioned range, it may be possible to increase the electron transport contact area during charging and discharging. When sulfur is disposed in an area corresponding to 100% of the entire inner and outer surface of the porous carbon material, the carbon material is completely covered with sulfur, resulting in poor electrolyte wetting and little or no contact with the electrically conductive material, thereby failing to accept electrons at the electrode and participate in electrochemical reaction.

A method for manufacturing the sulfur-carbon composite is not particularly limited in the present disclosure, and may include any method commonly used in the art. For example, the composite may be formed by simply mixing sulfur with the porous carbon material and thermally treating the mixture.

In addition to the above-described components, the positive electrode active material may further include at least one type of additive selected from transition metal elements, Group IIIA elements, Group IVA elements, compounds of these elements with sulfur and alloys of these elements with sulfur.

The transition metal elements may include Sc, Ti, V, Cr, Mn, Fe, Co, Ni, Cu, Zn, Y, Zr, Nb, Mo, Tc, Ru, Rh, Pd, Os, Ir, Pt, Au, Hg, etc., the Group IIIA elements may include Al, Ga, In, Tl, etc., and the Group IVA elements may include Ge, Sn, Pb, etc.

The sulfur may be included in an amount of from 40 to 95 wt%, preferably from 50 to 90 wt%, and more preferably from 60 to 85 wt% based on 100 wt% of the positive electrode active material layer of the positive electrode. In an embodiment of the present disclosure, when the sulfur-carbon composite is used as the positive electrode active material, the sulfur-carbon composite may be included in an amount of from 90 wt% to 97 wt% based on 100 wt% of the positive electrode active material layer. When the amount of the positive electrode active material is less than the aforementioned range, it is difficult to achieve sufficient electrochemical reaction of the positive electrode. On the contrary, when the amount of the positive electrode active material is more than the aforementioned range, the amounts of the conductive material and the binder as described below are lower, the resistance of the positive electrode increases, and the physical properties of the positive electrode decrease.

Optionally, the positive electrode active material layer may further include the conductive material to allow electrons to smoothly move in the positive electrode (specifically, the positive electrode active material) and the binder to attach the positive electrode active material to the current collector.

The conductive material is a material that acts as a movement passage of electrons from the current collector to the positive electrode active material by electrically connecting the electrolyte to the positive electrode active material. The conductive material may include any material having electrical conductivity without limitation.

For example, the conductive material may include graphite such as natural graphite, artificial graphite, etc.; carbon black such as Super-P, Denka black, acetylene black, Ketjen black, channel black, furnace black, lamp black, thermal black, etc.; carbon derivatives such as carbon nanotubes and fullerene; electrically conductive fibers such as carbon fibers and metal fibers; fluoro carbon; metal powder such as aluminum powder and nickel powder; or electrically conductive polymer such as polyaniline, polythiophene, polyacetylene and polypyrrole, used singly or in combination.

The conductive material may be included in an amount of from 0.01 to 30 wt% based on 100 wt% of the positive electrode active material layer of the positive electrode. When the amount of the conductive material is less than the aforementioned range, it results in poor electron transfer between the positive electrode active material and the current collector, inducing reductions in voltage and capacity. On the contrary, when the amount of the conductive material is more than the aforementioned range, the proportion of the positive electrode active material is lower and the total energy (the amount of charges) of the battery reduces. Accordingly, it is preferable to determine an optimum amount of the conductive material in the aforementioned range.

The binder plays a role in binding the positive electrode active material to the positive electrode current collector and interconnecting the positive electrode active material to increase the bond strength, and may include any known binder.

For example, the binder includes a fluororesin-based binder including polyvinylidene fluoride (PVdF) or polytetrafluoroethylene (PTFE); a rubber-based binder including styrene butadiene rubber (SBR), acrylonitrile-butadiene rubber and styreneisoprene rubber; a cellulose-based binder including carboxymethylcellulose (CMC), starch, hydroxypropylcellulose and regenerated cellulose; a polyalcohol-based binder; a polyolefin-based binder including polyethylene and polypropylene; a polyimide-based binder; a polyester-based binder; and a silane-based binder, or a mixture thereof or a copolymer thereof.

The binder may be included in an amount of from 0.5 to 30 wt% based on 100 wt% of the positive electrode active material layer of the positive electrode. When the amount of the binder is less than 0.5 wt%, the properties of the positive electrode may decrease and the positive electrode active material and the conductive material may be desorbed. When the amount of the binder is more than the aforementioned range, the ratio of the positive electrode active material and the conductive material in the positive electrode is lower and the capacity of the battery may reduce. Accordingly, it is preferable to determine an optimum amount of the binder in the aforementioned range.

The separator may separate the negative electrode from the positive electrode and provide a movement passage of lithium ions, and may include, without limitation, any type of separator commonly used in lithium secondary batteries. Specifically, the separator may include a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer or a stack structure of two or more layers of them. Additionally, commonly used porous nonwoven fabrics, for example, nonwoven fabrics made of high melting point glass fibers, polyethyleneterephthalate fibers, etc. may be used. Additionally, coated separators including ceramics or polymer materials may be used to ensure heat resistance or mechanical strength.

The lithium-sulfur battery is not limited to a particular shape and may come in various shapes, for example, a cylindrical type, a stack type, a coin type and so on.

Additionally, the present disclosure provides a battery module including the lithium-sulfur battery as a unit battery. The battery module may be used as a source of power for medium- and large-scale devices that require high temperature stability, long cycle characteristics and high capacity characteristics.

Examples of the medium- and large-scale devices may include devices that work using power produced by electric motors such as power tools; electric cars including electric vehicles (EV), hybrid electric vehicles (HEV), plug-in hybrid electric vehicles (PHEV), etc.; electric two-wheeled vehicles including E-bikes and E-scooters; electric golf carts; and energy storage systems, but is not limited thereto.

Hereinafter, the present disclosure will be described in detail through embodiments/examples. However, the embodiments/examples according to the present disclosure may be modified in many other forms, and the scope of the present disclosure should not be interpreted as being limited to the embodiments/examples described below. The embodiments/examples of the present disclosure are provided to describe the present disclosure to those skilled in the art thoroughly and completely.

Examples 1 to 12 and Comparative Examples 1 to 5

Preparation of electrolyte

An electrolyte including a solvent, a nonsolvent and a lithium salt was prepared to meet the SVR factor value, the MR factor value and the amount of LiI specified in Table 1 below.

In this instance, 2-methyl tetrahydrofuran (2MeTHF), ethyleneglycoldiethylether (EGDEE), tetrahydrofuran (THF), tetrahydropyran (THP), dimethylether (DME) or a mixture thereof was used as the solvent, 1,1,2,2-tetrafluoroethyl 2,2,3,3-tetrafluoropropylether (TTE) was used as the nonsolvent, and lithium bis(fluorosulfonyl)imide (LiFSI), lithium bis(trifluoromethanesulfonyl)imide (LiTFSI) and LiI were used as the lithium salt.

Manufacture of positive electrode

90 parts by weight of a sulfur-carbon composite (S : C = 75 : 25 weight ratio) as a positive electrode active material (an amount of sulfur alone was set to 67.5 wt% based on the total weight of the positive electrode, and activated carbon having a pore volume of 1.8 $cm^3/g$ was used as a carbon material), 5 parts by weight of Denka black as a conductive material, and 5 parts by weight of styrene butadiene rubber/carboxymethyl cellulose (SBR : CMC = 7 : 3 (weight ratio)) as a binder were mixed to prepare a positive electrode slurry composition, and the slurry composition was coated on a current collector (an Al foil), dried at 50°C for 12 hours and compressed using a roll press machine to manufacture a positive electrode (In this instance, the loading was 3.5 mAh/$cm^2$, and the porosity of the electrode was 65%).

Manufacture of lithium-sulfur battery

The as-prepared positive electrode and a 150 $\mu$m thick lithium metal negative electrode were placed with a polyethylene (PE) separator interposed between them, and the prepared electrolyte was injected to manufacture a coin cell-type lithium-sulfur battery. On the other hand, in the manufacture of the battery, the positive electrode was punched into a 14phi circular electrode, the polyethylene separator was punched into 19phi, and the lithium metal was punched into 16phi. Additionally, the battery was manufactured using a sparing solvating electrolyte (SSE) electrolyte system.

[TABLE 1]

| | Composition of solvent and nonsolvent (volume ratio) | SVR factor value | MR factor value | Amount of LiI (parts by weight based on 100 parts by weight of total electrolyte) | Life evaluation (cycle) |
|---|---|---|---|---|---|
| Example 1 | 2MeTHF:EGDEE:TT E (2:1:7) | 0.43 | 1.48 | 1 | 247 |
| Example 2 | 2MeTHF:EGDEE:TT E(1.5:1.5:7) | 0.43 | 1.33 | 1 | 215 |

(continued)

|  | Composition of solvent and nonsolvent (volume ratio) | SVR factor value | MR factor value | Amount of LiI (parts by weight based on 100 parts by weight of total electrolyte) | Life evaluation (cycle) |
|---|---|---|---|---|---|
| Example 3 | 2MeTHF:EGDEE:TT E(1:2:7) | 0.43 | 1.11 | 1 | 237 |
| Example 4 | 2MeTHF:EGDEE:TT E(1:2:7) | 0.43 | 1.04 | 2 | 307 |
| Example 5 | THP:EGDEE:TTE(1: 2:7) | 0.43 | 1.2 | 2 | 264 |
| Example 6 | DME:TTE (3:7) | 0.43 | 1.64 | 0.1 | 96 |
| Example 7 | DME:TTE (3:7) | 0.43 | 1.52 | 1 | 122 |
| Example 8 | THF:DME:TTE(1.5: 1.5:7) | 0.43 | 1.74 | 1 | 137 |
| Example 9 | THF:DME:TTE(1.5: 1.5:7) | 0.43 | 1.61 | 2 | 143 |
| Example 10 | THP:DME:TTE(0.5: 2.5:7) | 0.43 | 1.54 | 1 | 146 |
| Example 11 | 2MeTHF:DME:TTE( 0.5:2.5:7) | 0.43 | 1.53 | 1 | 145 |
| Example 12 | 2MeTHF:DME:EGD EE:TTE(1.5:1:1.5:6) | 0.67 | 1.62 | 1 | 147 |
| Comparati ve Example 1 | DME:TTE(3:7) | 0.43 | 1.65 | - | 85 |
| Comparati ve Example 2 | THF:TTE(2:8) | 0.25 | 1.9 | - | 79 |
| Comparati ve Example 3 | DME:TTE(3:7) | 0.43 | 2.58 | 1 | 45 |
| Comparati ve Example 4 | EGDEE:TTE(3:7) | 0.43 | 1.43 | - | 28 |
| Comparati ve Example 5 | EGDEE:TTE(3:7) | 0.43 | 0.71 | - | 7 |

Life evaluation

To determine the life characteristics of the lithium-sulfur secondary batteries prepared in Examples and Comparative Examples, the life cycle at the time when the capacity retention of the lithium-sulfur secondary battery is 80% was measured while repeatedly discharging and charging with 0.1 C current density 2.5 times, then charging with 0.2 C current density and discharging with 0.5C current density for 150 cycles.

## Claims

1. An electrolyte for a lithium-sulfur secondary battery, comprising:

   a solvent, a nonsolvent and at least two types of lithium salts,
   wherein the lithium salts include LiI,
   wherein the solvent and the nonsolvent have a Solvent Volume Ratio (SVR) factor value of from 0.2 to 0.7, and the SVR factor value is represented by the following Equation 1, and
   wherein the solvent and the lithium salts have a Molar mass Ratio (MR) factor value of from 0.75 to 1.85, and the MR factor value is represented by the following Equation 2,

[Equation 1]

$$\text{SVR factor} = \text{volume of the solvent} \div \text{volume of the nonsolvent}$$

[Equation 2]MR factor = Number of moles of the solvent ÷ (Number of moles of the lithium salts excluding the LiI).     [Equation 2]

2.  The electrolyte for the lithium-sulfur secondary battery according to claim 1, wherein the SVR factor value is from 0.3 to 0.65.

3.  The electrolyte for the lithium-sulfur secondary battery according to claim 1, wherein the MR factor value is from 1.0 to 1.75.

4.  The electrolyte for the lithium-sulfur secondary battery according to claim 1, wherein the solvent has a solubility of 0.1M or more for the lithium salts, and
    wherein the nonsolvent has a solubility of less than 0.1M for the lithium salts.

5.  The electrolyte for the lithium-sulfur secondary battery according to claim 4, wherein the solvent includes a linear ether, a cyclic ether or a mixture thereof.

6.  The electrolyte for the lithium-sulfur secondary battery according to claim 4, wherein the solvent includes a mixture of a linear ether and a cyclic ether.

7.  The electrolyte for the lithium-sulfur secondary battery according to claim 4, wherein the nonsolvent includes a fluorinated ether.

8.  The electrolyte for the lithium-sulfur secondary battery according to claim 1, wherein the lithium salts include lithium bis(fluorosulfonyl)imide (LiFSI), lithium bis(trifluoromethanesulfonyl)imide (LiTFSI) and LiI.

9.  The electrolyte for the lithium-sulfur secondary battery according to claim 1, wherein an amount of the LiI is from 0.1 to 3.0 parts by weight based on total 100 parts by weight of the electrolyte for the lithium-sulfur secondary battery.

10. The electrolyte for the lithium-sulfur secondary battery according to claim 8, wherein the amount of the LiI is from 0.35 to 15 parts by weight based on total 100 parts by weight of the lithium salts.

11. The electrolyte for the lithium-sulfur secondary battery according to claim 1, wherein the electrolyte for the lithium-sulfur secondary battery does not include at least one of a nitrate-based compound and a nitrite-based compound.

12. A lithium-sulfur secondary battery comprising:
    a negative electrode; a positive electrode; a separator; and the electrolyte according to any one of claims 1 to 11.

## INTERNATIONAL SEARCH REPORT

| International application No. |
| --- |
| **PCT/KR2023/021170** |

### A. CLASSIFICATION OF SUBJECT MATTER

**H01M 10/0569**(2010.01)i; **H01M 10/0525**(2010.01)i

According to International Patent Classification (IPC) or to both national classification and IPC

### B. FIELDS SEARCHED

Minimum documentation searched (classification system followed by classification symbols)

H01M 10/0569(2010.01); H01M 10/052(2010.01); H01M 10/0525(2010.01); H01M 10/0567(2010.01); H01M 10/0568(2010.01); H01M 4/38(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 황 (lithium sulfur), 전해질 (electrolyte), 비용매 (non-solvent), 불소계 에테르 (fluorinated ether), 리튬 비스(플루오로설포닐)이미드 (LiFSI), 리튬 비스(트리플루오로메탄설포닐)이미드 (LiTFSI), 요오드화리튬 (LiI)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2022-0057283 A (LG ENERGY SOLUTION, LTD.) 09 May 2022 (2022-05-09)<br>See abstract; and paragraphs [0011], [0019], [0044] and [0077]-[0079]. | 1-12 |
| Y | WO 2019-151725 A1 (LG CHEM, LTD.) 08 August 2019 (2019-08-08)<br>See abstract; and paragraphs [0121]-[0133]. | 1-12 |
| A | US 2019-0312306 A1 (NEC CORPORATION) 10 October 2019 (2019-10-10)<br>See entire document. | 1-12 |
| A | KR 10-2005-0040974 A (SAMSUNG SDI CO., LTD.) 04 May 2005 (2005-05-04)<br>See entire document. | 1-12 |
| A | WO 2018-098249 A2 (CAMX POWER, L.L.C.) 31 May 2018 (2018-05-31)<br>See entire document. | 1-12 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 April 2024** | **15 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2023/021170** |

| Patent document cited in search report | | | Publication date (day/month/year) | Patent family member(s) | | | Publication date (day/month/year) |
| --- | --- | --- | --- | --- | --- | --- | --- |
| KR | 10-2022-0057283 | A | 09 May 2022 | CN | 115485902 | A | 16 December 2022 |
| | | | | EP | 4117073 | A1 | 11 January 2023 |
| | | | | JP | 2023-525521 | A | 16 June 2023 |
| | | | | KR | 10-2022-0057276 | A | 09 May 2022 |
| | | | | KR | 10-2022-0057288 | A | 09 May 2022 |
| | | | | KR | 10-2022-0057297 | A | 09 May 2022 |
| | | | | US | 2023-0133857 | A1 | 04 May 2023 |
| | | | | WO | 2022-092697 | A1 | 05 May 2022 |
| WO | 2019-151725 | A1 | 08 August 2019 | CN | 110998959 | A | 10 April 2020 |
| | | | | CN | 110998959 | B | 24 March 2023 |
| | | | | EP | 3651256 | A1 | 13 May 2020 |
| | | | | EP | 3651256 | B1 | 23 March 2022 |
| | | | | JP | 2021-501454 | A | 14 January 2021 |
| | | | | JP | 7045547 | B2 | 01 April 2022 |
| | | | | KR | 10-2019-0092284 | A | 07 August 2019 |
| | | | | PL | 3651256 | T3 | 20 June 2022 |
| | | | | US | 11329313 | B2 | 10 May 2022 |
| | | | | US | 2020-0243898 | A1 | 30 July 2020 |
| US | 2019-0312306 | A1 | 10 October 2019 | JP | 7335035 | B2 | 29 August 2023 |
| | | | | US | 10897062 | B2 | 19 January 2021 |
| | | | | WO | 2017-217407 | A1 | 21 December 2017 |
| KR | 10-2005-0040974 | A | 04 May 2005 | CN | 1612383 | A | 04 May 2005 |
| | | | | CN | 1612383 | B | 16 June 2010 |
| | | | | EP | 1528617 | A2 | 04 May 2005 |
| | | | | EP | 1528617 | A3 | 04 October 2006 |
| | | | | EP | 1528617 | B1 | 09 July 2008 |
| | | | | JP | 2005-135895 | A | 26 May 2005 |
| | | | | JP | 4012174 | B2 | 21 November 2007 |
| | | | | KR | 10-0603303 | B1 | 20 July 2006 |
| | | | | US | 2005-0095507 | A1 | 05 May 2005 |
| | | | | US | 7078132 | B2 | 18 July 2006 |
| WO | 2018-098249 | A2 | 31 May 2018 | CA | 3043497 | A1 | 31 May 2018 |
| | | | | CN | 110168781 | A | 23 August 2019 |
| | | | | EP | 3545573 | A2 | 02 October 2019 |
| | | | | JP | 2019-536235 | A | 12 December 2019 |
| | | | | KR | 10-2019-0077553 | A | 03 July 2019 |
| | | | | US | 2019-0312269 | A1 | 10 October 2019 |
| | | | | WO | 2018-098249 | A3 | 15 November 2018 |

Form PCT/ISA/210 (patent family annex) (July 2022)

**REFERENCES CITED IN THE DESCRIPTION**

**Patent documents cited in the description**

- KR 1020220183762